# EUROPÄISCHE PATENTANMELDUNG

(11) **EP 2 072 987 A2**
(43) Veröffentlichungstag der Anmeldung: **24.06.2009**
(21) Anmeldenummer: 08105659.0
(22) Anmeldetag: 24.10.2008
(51) Int. Cl.: G01L 23/08

(54) **Verfahren zur Erkennung von Kompressionsverlusten bei einem Hubkolbenverbrennungsmotor eines Kraftfahrzeugs**

(30) Priorität: 21.12.2007 DE 102007062247
(71) Anmelder: ROBERT BOSCH GMBH, 70442 Stuttgart (DE)
(72) Erfinder: Iske, Burkhard, 71272, Renningen-Malmsheim (DE); Merkle, Michael, 70192, Stuttgart (DE)

(57) **Zusammenfassung**

Die Erfindung betrifft ein Verfahren zur Erkennung von Kompressionsverlusten bei einem Hubkolbenverbrennungsmotor eines Kraftfahrzeugs.

Dieses Verfahren wird im Verlauf eines Startvorgangs des Hubkolbenverbrennungsmotors durchgeführt und wertet die Stromentnahme am Akkumulator über die Zeit aus. Kompressionsverluste sind anhand einer reduzierten Stromaufnahme des Starters feststellbar. Sie werden als Eintrag in einem elektronischen Speicher abgespeichert. Dieser Eintrag lässt sich mit geringem Aufwand zu einem späteren Zeitpunkt auslesen.

Bislang sind zur Feststellung bestehender Kompressionsverluste externe Messeinrichtungen am Hubkolbenverbrennungsmotor zu installieren und aufwändige Messarbeitsgänge durchzuführen und auszuwerten.

## Beschreibung

### Stand der Technik

Die Erfindung betrifft ein Verfahren zur Erkennung von Kompressionsverlusten bei einem Hubkolbenverbrennungsmotor eines Kraftfahrzeugs gemäß den gattungsbildenden Merkmalen des Anspruchs 1. Der Verlust der Motorkompression bei einem oder mehreren Zylindern eines Hubkolbenverbrennungsmotors hat seine Ursache in defekten Dichtungen, Kolben, Kolbenringen und/oder Ventilen. Der Fahrer des Fahrzeugs bemerkt einen unrunden Motorlauf und/oder einen Leistungsverlust.

Zur Diagnose von Kompressionsverlusten werden derzeit bei Benzinmotoren die Zündkerzen oder bei Dieselmotoren die Injektoren ausgebaut und durch Drucksensoren ersetzt. Anschließend werden die Motoren durch Betätigung des Elektrostarters mechanisch angetrieben und dabei der Kompressionsdruck der einzelnen Zylinder aufgezeichnet und ausgewertet. Diese Diagnosemethode setzt demnach externe Testeinrichtungen und zeitaufwändige Umbaumaßnahmen am zu prüfenden Hubkolbenverbrennungsmotor voraus. Entsprechend zeitaufwändig und teuer ist diese Diagnose.

Bekanntlich ist ein Starter eines Hubkolbenverbrennungsmotors einer von mehreren elektrischen Verbrauchern innerhalb eines elektronischen Spannungsversorgungssystems des Kraftfahrzeugs. Dieses Spannungsversorgungssystem umfasst neben den Verbrauchern einen Generator, der vom Hubkolbenverbrennungsmotor angetriebenen wird und einen Akkumulator (Starterbatterie), der von diesem Generator gespeist wird. Zur Überwachung des Ladungszustands dieses Akkumulators werden heutzutage elektronische Überwachungseinheiten eingesetzt. Deren Funktion besteht darin, elektrische Verbraucher in Abhängigkeit des momentanen Ladezustands des Akkumulators und unter Berücksichtigung der augenblicklichen Betriebsbedingungen des Kraftfahrzeugs zu- oder abzuschalten, um eine Überlastung des Spannungsversorgungssystems und damit eine drohende Betriebsunfähigkeit des Kraftfahrzeugs zu verhindern. Derartige Überwachungseinheiten sind üblicherweise in unmittelbarer Nähe zum Akkumulator des Spannungsversorgungssystems angebracht. Ihr Aufbau und ihre Funktionsweise zählen zum allgemeinen Stand der Technik.

Beispielhaft sei diesbezüglich auf die Offenbarung in der DE 101 51 680 A1 verwiesen. Bei diesem Stand der Technik wird anhand der Überwachungseinheit das Ende eines Startvorgangs festgestellt. Die bekannte Überwachungseinheit wertet dazu den Verlauf der Stromaufnahme des den Hubkolbenverbrennungsmotor antreibenden Starters aus. Auf das Startende wird geschlossen, wenn die Stromaufnahme des Starters das Vorzeichen ändert, das heißt sobald der Starter dem Akkumulator keinen Strom mehr entnimmt, sondern als Generator arbeitet und an den Akkumulator elektrische Energie liefert.

### Offenbarung der Erfindung

Das der Erfindung zugrundeliegende Verfahren ermöglicht die Erkennung von Kompressionsverlusten bei einem Hubkolbenverbrennungsmotor auf elektronischem Weg, ohne den Einsatz externer Prüfeinrichtungen. Das Verfahren lässt sich begleitend zum bestimmungsgemäßen Betrieb eines Hubkolbenverbrennungsmotors durchführen, ist vom Fahrer nicht wahrnehmbar und macht Umbaumaßnahmen am Hubkolbenverbrennungsmotor zur Fehlererkennung entbehrlich.

Erfindungsgemäß wird zur Feststellung von Kompressionsverlusten der Verlauf des vom Starter bei einem Startvorgang dem Akkumulator entnommenen Stroms ausgewertet.
Der Strombedarf des Starters ist direkt proportional zu der geleisteten physikalischen Arbeit bzw. zur Leistungsaufnahme um den Hubkolbenverbrennungsmotor während eines Startvorgangs mechanisch durchzudrehen. Sinngemäß wird beim vorgeschlagenen Verfahren der Starter deshalb als Sensor für das zum Antrieb des Hubkolbenverbrennungsmotors notwendige Drehmoment verwendet.

Die Erfassung der Stromaufnahme des Starters ist anhand der Einrichtungen durchführbar, die in modernen Kraftfahrzeugen ohnehin zur Überwachung des Ladezustands eines Akkumulators bereits vorhanden sind. Das vorgeschlagene Verfahren ist deshalb in bestehende Überwachungselektronik integrierbar und kommt ohne den Einbau zusätzlicher elektromechanischer Einrichtungen aus.

Weitere Vorteile oder vorteilhafte Weiterbildungen der Erfindung ergeben sich aus den Unteransprüchen und der nachfolgenden Beschreibung.

Durch eine zusätzliche Erfassung der vorherrschenden Betriebsspannung und/oder der Betriebstemperatur lassen sich die Leistungsaufnahme des Starters während eines Startvorgangs relativ exakt ermitteln und eventuell vorhandene Kompressionsverluste mit entsprechend hoher Zuverlässigkeit feststellen.

### Zeichnung

Das erfindungsgemäße Verfahren wird anhand der beiliegenden Zeichnung erläutert.
Figur 1 zeigt ein Messdiagramm eines Startvorgangs eines Hubkolbenverbrennungsmotors. In diesem Messdiagramm ist der Verlauf des, einem Akkumulator entnommenen Stroms über die Zeit aufgetragen;
Figur 2 verdeutlicht das der Erfindung zugrunde liegende Verfahren nochmals anhand eines Ablaufdiagramms.

### Beschreibung der Zeichnung

Dem erfindungsgemäßen Verfahren zur Erkennung von Kompressionsverlusten eines Hubkolbenverbrennungsmotors liegt die Erkenntnis zugrunde, dass sich eventuell bestehende Kompressionsverluste in einer verminderten Stromaufnahme eines elektrischen Starters während eines Startvorgangs niederschlagen.

Dies beruht darauf, dass sich die vom Starter aufzubringende physikalisch Arbeit, respektive die notwendige Leistung zum Antrieb des Hubkolbenverbrennungsmotors zusammengesetzt aus einem Leistungsanteil zur mechanischen Betätigung des Kurbeltriebs und einem Leistungsanteil zur Ansaugung und Verdichtung der Ansaugluft in den einzelnen Zylindern. Nachvollziehbarerweise nimmt deshalb die Gesamtleistung des Starters ab, wenn an wenigstens einem der Zylinder Kompressionsverluste auftreten, weil im betroffenen Zylinder dann gar keine oder zumindest eine stark verminderte Verdichtungsarbeit anfällt.

Eine Weiterbildung der Erfindung fußt darauf, dass zur Feststellung von Kompressionsverlusten eines Hubkolbenverbrennungsmotors die den Ladungszustand eines Akkumulators erfassenden und in modernen Kraftfahrzeugen ohnehin vorhandenen Überwachungseinrichtungen einsetzbar sind, da diese Einrichtungen aus anderen Beweggründen bereits dahingehend auswertbare Signalverläufe liefern.

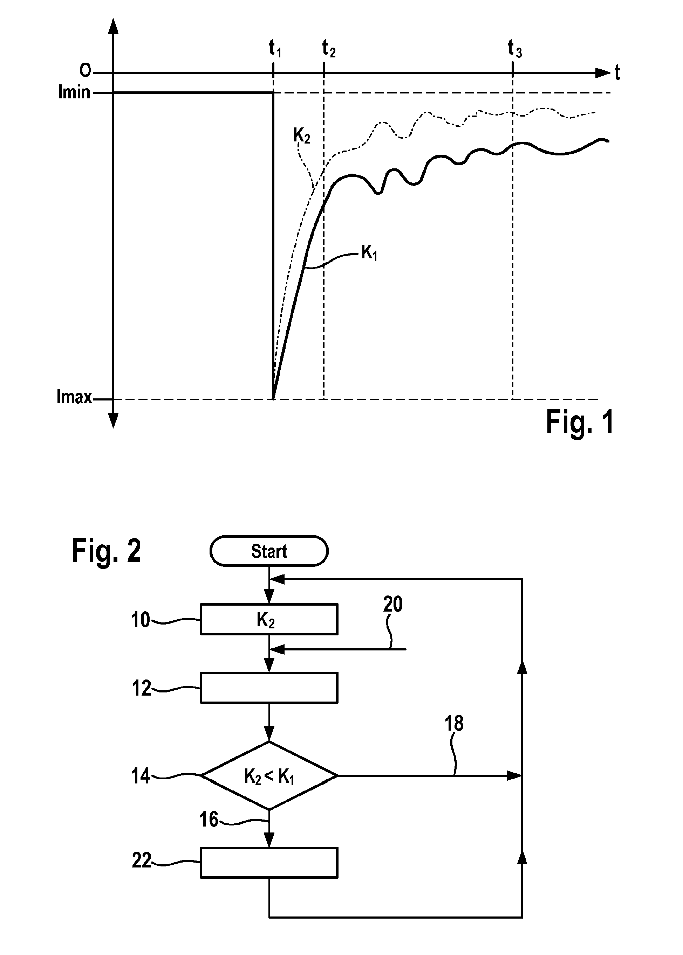

Das in Figur 1 gezeigte Diagramm zeigt den Verlauf des, einem Akkumulator entnommenen Stroms, aufgetragen über die Zeit, während eines beliebigen Startvorgangs. Der im Diagramm abgebildete Zeitraum beginnt kurz vor einer Betätigung des Starters durch den Fahrer und endet mit dem Anspringen des Hubkolbenverbrennungsmotors, das heißt wenn der Hubkolbenverbrennungsmotor den selbständigen Betrieb aufgenommen hat. Vor der Betätigung des Starters wird dem Akkumulator lediglich ein vernachlässigbarer Strom lₘᵢₙ entnommen, beispielsweise zur Versorgung anderer elektrischer Verbraucher innerhalb des Spannungsversorgungssystems eines Kraftfahrzeugs.

Zum Zeitpunkt t₁ wird der Starter durch den Fahrer betätigt und der dem Akkumulator entnommene Strom nimmt seinen Maximalwert lₘₐₓ an. Der Starter treibt eine Kurbelwelle des Hubkolbenverbrennungsmotors zu einer Rotationsbewegung an und zwingt den Kolben der einzelnen Zylinder eine hin- und hergehenden Hubbewegung auf. Bei dieser Hubbewegung wird von den Kolben Umgebungsluft in einen Brennraum gesaugt und verdichtet, bis zu einem geeigneten Zeitpunkt Kraftstoff zugemessen und das Kraftstoff-Luft-Gemisch fremdgezündet wird oder das Kraftstoff-Luft-Gemisch sich druckbedingt selbst entzündet. Ist dies in allen vorhandenen Zylindern erfolgt ist der Hubkolbenverbrennungsmotor selbst betriebsfähig und benötigt keinen Fremdantrieb durch den Starter mehr. Entsprechend verringert sich die vom Starter aufzubringende physikalische Arbeit mit zunehmender Zeitdauer des Startvorgangs und die Stromentnahme geht, wie im Diagramm erkennbar, sukzessive wieder auf den ursprünglichen Minimalwert lₘᵢₙ zurück.

Mit K₁ ist im Diagramm die Sollverlauf-Kennlinie des dem Akkumulator durch die Betätigung des Starters entnommenen Stroms bei einem Hubkolbenverbrennungsmotor ohne Kompressionsverluste bezeichnet. Diese Sollverlauf-Kennlinie zeigt im Zeitraum zwischen den Zeitpunkten t₂ und t₃ insgesamt vier Kompressionsphasen anhand von sinusförmigen Schwankungen des Stromentnahmesignals. Die Anzahl der Kompressionsphasen deutet auf die Gesamtzylinderzahl des exemplarisch untersuchten Hubkolben-Verbrennungsmotors hin. Bei einem Hubkolben-Verbrennungsmotor mit Kompressionsverlusten ist aus den erläuterten Gründen die physikalische Arbeit, respektive die Stromentnahme durch den Starter geringer, so dass sich eine lstverlauf-Kennlinie K₂ einstellt, die ab dem Zeitpunkt t₁ oberhalb der im Diagramm dargestellten Sollverlauf-Kennlinie K₁ verläuft.

Beim erfindungsgemäße Verfahren wird überprüft, ob ein Unterschied zwischen den beiden Verlaufskennlinien K₁ und K₂ besteht und insbesondere, ob die Istverlauf-Kennlinie K₂ signifikant in Richtung kleinerer Stromstärken von der Sollverlauf-Kennlinie K₁ abweicht. Ist dies der Fall wird auf bestehende Kompressionsverluste des Hubkolben-Verbrennungsmotors geschlossen und in einem auslesbaren elektronischen Speicher ein entsprechender Eintrag vorgenommen.

Das dargelegte Verfahren ist in Figur 2 nochmals grafisch veranschaulicht. Zu Beginn wird der Starter vom Fahrer betätigt und die Istverlauf-Kennlinie K₂ (Figur 1) des dem Akkumulator entnommenen Stroms während eines beliebigen Startvorgangs erfasst (Pos. 10). Idealerweise wird dabei der Verlauf der Stromentnahme unmittelbar vor dem Anspringen des Hubkolbenverbrennungsmotors erfasst, das heißt in einem Kennlinienbereich zwischen den Zeitpunkten t₂ und t₃ nach Figur 1, in dem die Kompressionsphasen der verschiedenen Zylinder elektronisch erkenn- und auswertbar werden.

Besonders einfach umsetzbar ist die Signalerfassung, wenn die zugrunde liegende Strommessung nicht direkt am Starter vorgenommen wird, sondern an einer ohnehin vorhandenen Überwachungseinheit für den Akkumulator. Idealerweise wird der ermittelte Signalverlauf in einer mit der Überwachungseinheit gekoppelten Auswerteschaltung gespeichert bzw. wie nachfolgend erläutert weiter verarbeitet (Figur 2; Pos. 12).

Dahingehend vorteilhaft ist es, zusätzlich zur Stromentnahme auch die Betriebsspannung zu erfassen, da aus beiden Messsignalen die vom Starter aufgebrachte Leistung errechenbar ist. Ein eventuell vorhandener Spannungsabfall zwischen der am Akkumulator anliegenden Spannung und der Spannung am Starter stellt dabei kein technisches Hindernis dar, da sich dieser Spannungsabfall durch ein in der Auswerteschaltung elektronisch hinterlegtes Spannungsabfallmodell kompensieren lässt. Eine weitere Verbesserung der Ergebnisse ist erreichbar, wenn zusätzlich die am Akkumulator vorherrschende Betriebstemperatur berücksichtigt wird. Die mögliche Einbeziehung dieser zusätzlichen Betriebsparameter in die Signalauswertung ist in Figur 2 anhand des Pfeils 20 veranschaulicht.

In Verfahrensschritt 14 wird überprüft, ob die gemessene Istverlauf-Kennlinie K₂ in Richtung kleinerer Stromwerte signifikant von einer in der Auswerteelektronik abgespeicherten Sollverlauf-Kennlinie K₁ abweicht. Falls ja (Pos. 16), wird in einem elektronischen Speicher ein entsprechender Eintrag vorgenommen (Pos. 22); falls nein (Pos. 18), wird das Verfahren bei einem nachfolgenden Startvorgang wiederholt. Eine Wiederholung des Verfahrens soll auch bei positivem Ausgang der Prüfung stattfinden, um über die gesamte Lebensdauer des Hubkolbenverbrennungsmotors die Überwachung auf Kompressionsverluste durchzuführen.

Selbstverständlich sind Änderungen oder Ergänzungen am beschriebenen Verfahren denkbar, ohne vom Grundgedanken der Erfindung abzuweichen.

## Patentansprüche

1. Verfahren zur Erkennung von Kompressionsverlusten bei einem Hubkolbenverbrennungsmotor eines Kraftfahrzeugs,
wobei das Kraftfahrzeug ausgestattet ist mit einem Spannungsversorgungssystem aus einem Generator, der vom Hubkolbenverbrennungsmotor angetriebenen wird,
einem vom Generator gespeisten Akkumulator und wenigstens einem elektrischen Verbraucher in Form eines Starters, durch den der Hubkolbenverbrennungsmotor während eines Startvorgangs mechanisch antreibbar ist,
**dadurch gekennzeichnet,**
**dass** während eines Startvorgangs des Hubkolbenverbrennungsmotors von einer Überwachungseinheit eine Istverlauf-Kennlinie K₂ des dem Akkumulator über die Zeit entnommenen Stroms elektronisch erfasst wird, dass diese Istverlauf-Kennlinie K₂ mit einer in der Überwachungseinheit elektronisch hinterlegten Sollverlauf-Kennlinie K₁ verglichen wird und dass bei einer Abweichung der Istverlauf-Kennlinie K₂ in Richtung kleinerer Stromwerte von der Sollverlauf-Kennlinie K₁ auf Kompressionsverluste des Hubkolbenverbrennungsmotors geschlossen wird und ein entsprechender Eintrag in einem auslesbaren elektronischen Speicher vorgenommen wird.

2. Verfahren nach Anspruch 1, **dadurch gekennzeichnet,**
**dass** die Stromentnahme von einer Überwachungseinheit erfasst und ausgewertet wird, welche den Betrieb des Generators und der anderen elektrischen Verbraucher des Kraftfahrzeugs in Abhängigkeit des Ladezustands des Akkumulators und/oder der momentanen Betriebsbedingungen des Hubkolbenverbrennungsmotors steuert.

3. Verfahren nach Anspruch 1 oder 2, **dadurch gekennzeichnet,**
**dass** neben der Stromentnahme die Betriebsspannung des Spannungsversorgungssystems erfasst und ausgewertet wird.

4. Verfahren nach einem der Ansprüche 1 bis 3, **dadurch gekennzeichnet,**
**dass** neben der Stromentnahme die Betriebstemperatur des Akkumulators erfasst und ausgewertet wird.

5. Verfahren nach einem der Ansprüche 2 bis 4, **dadurch gekennzeichnet,**
**dass** die Überwachungseinheit die Stromentnahme und/oder die Betriebsspannung und/oder die Betriebtemperatur während eines Zeitintervalls erfasst, das unmittelbar vor dem Anspringen des Hubkolben-Verbrennungsmotors liegt.
